# EUROPEAN PATENT SPECIFICATION

(11) **EP 1 812 242 B1**
(45) Date of publication and mention of the grant of the patent: **30.07.2008**
(21) Application number: 05794137.9
(22) Date of filing: 17.10.2005
(51) Int. Cl.: B41M 5/30, G11B 5/62

(54) **SHEET PRODUCT FOR THERMAL PRINTING AND FOR MAGNETIC RECORDING**
FLÄCHENGEBILDE FÜR THERMODRUCK UND FÜR MAGNETISCHE AUFZEICHNUNG
PRODUIT EN FEUILLES POUR IMPRESSION THERMIQUE ET POUR ENREGISTREMENT MAGNÉTIQUE

(30) Priority: 18.10.2004 GB 0423107
(43) Date of publication of application: 01.08.2007
(73) Proprietor: Arjo Wiggins Limited, Manchester M1 5ES (GB)
(72) Inventor: COOPER, John Brian, Winchester, Hants SO21 2NN (GB); HOBSON, Michael Eric, Longwick, Bucks HP27 9SE (GB); SAUNDERS, Richard David, Windsor, Berkshire SL4 3JZ (GB)
(74) Representative: Scott, Susan Margaret
(86) International application number: PCT/GB2005/004003
(87) International publication number: WO 2006/043044

(56) References cited:
- WO-A-03/101744
- US-A- 5 411 798
- US-A- 5 447 790
- US-A- 5 981 115

## Description

This invention relates to a sheet product of the type in which print is developed by the direct application of heat to a thermally sensitive material.

In the manufacture of conventional thermal paper, a substrate such as paper is coated over its entire surface with an aqueous dispersion comprising colour formers, colour developers and sensitizers which are initially colourless but which become coloured on exposure to heat. When such a paper is passed under the print head of a thermal printer, the areas which are activated by the heated print elements of the printer form coloured images on the surface of the paper. In an alternative approach, for example as in US 5,888,283, a thermal ink which can be printed onto paper using conventional printing processes is used, thus eliminating the need to use coating equipment to apply the thermal coating.

Our PCT applications PCT/GB2004/004161 and PCT/GB2004/004149 (filed 29 September 2004) relate to a method of preparing a thermally printable sheet which comprises providing a substrate comprising a base sheet having at least one surface coated with a layer containing a pigment in solid porous particulate form, and, using a printer, printing onto the coated surface of said substrate, a thermal ink which comprises a colour former, a colour developer and a sensitizer, in which the sensitizer comprises dimethyl terephthalate, and in which the ink also comprises at least one pigment; and to a novel ink which may be used in such a process, which comprises a pigment, a colour former, a colour developer and a sensitizer, in which the colour former comprises 3-dibutylamino-6-methyl-7-anilinofluoran; the colour developer comprises bisphenol A; and the sensitizer comprises dimethyl terephthalate.

Sheet products capable of carrying magnetic information as well as conventional printed information are known. WO 01/92961 discloses a sheet material carrying a coating containing cavities in which electrically- and/or magnetically-activatable particles are located. WO 03/102926 describes a magnetically-activatable sheet product comprising a pair of laminated outer sheets at least one of which is provided with a pigment/binder primer coat on its inward facing surface, between which is a magnetic layer comprising magnetically-activatable particles in a binder matrix, the outer sheets having sufficient opacity to mask the appearance of the magnetic layer. WO 03/101744 describes a magnetically-activatable sheet product for use in pressure-sensitive copying paper systems.

It would be desirable to provide a sheet product which is capable of carrying magnetically-readable information as well as being printed using a conventional thermal printer. EP 774 363 describes a particular thermal paper, and states that "To the thermosensitive recording material of the present invention, additional functions can be imparted by applying additional works...a magnetic layer is formed on the back surface of the recording material to provide a thermosensitive and magnetic recording material", while EP 492 628 relates to particular chemical compositions for use in a reversibly thermosensitive coloring composition, and a magnetic layer may be interposed between the support and the reversibly thermosensitive coloring layer. However, neither of these documents provides enabling descriptions as to how to make a sheet which is capable of carrying non-thermal visible print on both sides while also carrying magnetic information and thermal print. Thermal paper is subjected to high temperatures during the development of the visible thermal print. It is well known that high temperatures can lead to corruption of magnetic data (as for example with audio or video tapes left in direct sunshine), and therefore it would be expected that thermal printing, which results in localised temperatures well in excess of 100°C, would interfere with the integrity of any magnetic data stored on the same document.

We have now found a particular system which enables thermal print to be produced on a document also capable of carrying magnetic data.

Accordingly the present invention provides a magnetically-activatable sheet product comprising (i) a pair of laminated outer sheets between which is a magnetic layer comprising magnetically-activatable particles in a binder matrix; (ii) at least one layer applied to the outward facing surface of one of the outer sheets, said layer comprising a pigment and a binder; and (iii) a thermal coating or a thermal ink applied to said layer (ii).

The combination of the layer (ii) (a pre-coat layer) and a thermal coating or a thermal ink applied thereon allows magnetic data to be written to the magnetic layer, and subsequently, the sheet to be processed by passing through a thermal printer, without degradation or corruption of the magnetically stored data. Alternatively, if desired, the sheet may be processed by passing through a thermal printer, and subsequently writing magnetic data to the magnetic layer. Surprisingly, it has been found than, when using a suitable pre-coat layer (ii), passing the sheet pre-written with magnetic data through a conventional thermal printer does not degrade or corrupt that data

The magnetic layer may be formed as described in WO 03/102926. For example, it may be formed by a coating on the inwardly facing surface of one or both of the outer sheets, or it may be formulated as a laminating adhesive which is applied as or just before the two outer sheets are brought together in a laminating press or similar equipment.

The magnetic layer can be formulated from magnetically-activatable materials, for example chromium dioxide, iron oxide, polycrystalline nickel-cobalt alloys, cobalt-chromium or cobalt-samarium alloys, or barium-ferrite. The binder used can be selected from, for example, a polyvinyl alcohol, a latex, a starch or a proteinaceous binder such as a soy protein derivative. It is preferably a styrene-butadiene or acrylic or other latex. The coatweight applied is typically such that up to about 10 g m⁻² of magnetically-activatable material is present, but this can be varied in accordance with the level of magnetic signal required. The magnetic layer can if desired contain an extender such as calcium carbonate, which not only offers cost reduction but also helps to reduce the darkness of the magnetic layer.

Preferably the magnetically-activatable material has a low coercivity, i.e. less than 1000 oersteds, preferably less than 500 oersteds. The use of high coercivity materials leads to a material which is difficult to demagnetise and hence is tolerant of stray magnetic fields in the environment. Such materials are, however, expensive, and also suffer from the technical disadvantage that they require the use of high magnetic fields to write magnetic information. Unlike known systems, the use of the present system is tolerant of stray magnetic fields, which enables the use of low coercivity materials.

A laminating binder or adhesive is normally used to secure the sheets together, sandwiching the magnetic layer, to form the laminate. Such a binder may be, for example, a polyvinyl alcohol, a latex, a starch or a proteinaceous binder such as a soy protein derivative.

In a preferred embodiment of the invention, one or both outer sheets carry a pigment/binder primer coat on its inward facing surface. This primer coat is typically formulated from conventional coating pigments as used in the paper industry, for example calcium carbonate (particularly precipitated calcium carbonate), kaolin or other clays (particularly calcined clays) and/or, where high opacity is required and justifies the extra cost, titanium dioxide. The binder used can be conventional, for example a latex (particularly a styrene-butadiene or acrylic latex), a starch or starch derivative, a polyvinyl alcohol and/or a soy protein derivative or other proteinaceous material. The primer coatweight is typically in the range of about 5 to 15 g m⁻², but this can vary in accordance with the masking effect desired and the weight of the outer sheets used (heavier base papers normally require lower primer coatweights). Where the product contains only one outer sheet bearing an inward-facing primer coat, magnetic data is preferably written to and read from the side of the product carrying the primer coating.

Preferably the product according to the invention is constructed using outer sheets which are sufficiently opaque such that, in the finished product, the appearance of the magnetic layer is masked. The outer sheets are preferably made of paper, although plastic sheet materials which simulate the properties of paper (so-called "synthetic paper") can alternatively be used. The material used for the outer sheets are preferably such as to provide a satisfactory masking effect and desirability and also a good final product appearance. In such applications as thermal tickets, the outer sheets may be relatively heavy, typically between 60 to 150 g m⁻² to make a final ticket between 120 and 300 g m⁻². Alternatively, the outer sheets may be of a lightweight base paper (typically about 50 g m⁻² or less), so that when laminated, the final product will not be excessively thick or heavy. Base papers, for example lightweight base papers, of the kind conventionally used in thermal paper are of course particularly suitable in this context, since they are of good appearance and combine lightness with strength. Preferably, the outer sheets and especially the outer sheet that will be magnetically read through will have a thickness of 65 microns or less.

In general, an outer sheet will be regarded as having sufficient coverage/opacity to mask the appearance of the magnetic layer if the whiteness of the resulting product, measured on an Elrepho 3000 instrument with the use of UV light enhancement, is within 5 points of the original base sheet on the L scale. Preferably the whiteness approaches that of the original base sheet used to produce the product.

The layer (ii) of the product of the invention is a pigment/binder pre-coat layer which contains one or more pigments and one or more binders. The pigment may for example be a pigment in solid porous particulate form. Such a pigment has a high surface area and a high absorptivity, preferably with a surface area measured at >100 m²/g using the BET method or an ink absorbency of >50g oil/100g pigment (as described in Kirk-Othmer Encyclopedia of Chemical Technology, 3rd Edition, Volume 17, pages 796 - 808). Ideally, the materials used are selected to provide added opacity to the finished product, and to prevent absorption of the thermal layer into the base sheet, and materials having a high level of thermal insulation are preferred. The pigment preferably comprises kaolin or another clay, particularly calcined clay, calcium carbonate (particularly in precipitated form, which is porous and of high absorptivity), silica, and/or titanium dioxide. Alternatively or in addition, the coating may comprise a plastic pigment in the form of hollow spheres. Mixtures of any of the pigments described above may be used, and the list above is not exhaustive.

The binder used in layer (ii) can be conventional, for example a latex (particularly a styrene-butadiene or acrylic latex), a starch or starch derivative, a polyvinyl alcohol and/or a soy protein derivative or other proteinaceous material.

The layer (ii) may be applied by direct coating onto the relevant surface to provide a covering over the whole area; alternatively, it may be discretely printed onto a sheet in those positions where it is desired to apply the thermal coating or thermal ink. It may be applied before or after lamination; for example, a thermal coating may be applied just before the application of a thermal layer by multi-coating slide application. Preferably the layer is applied at a coatweight in the range of about 5 to 15 g m⁻², but this may vary widely depending upon individual circumstances.

Naturally the layer (iii) is applied after the application of layer (ii); this may be before lamination of the product provided that the lamination process does not use excessive heat, for example to dry the product, or it may be after lamination. Layer (iii) may cover substantially all of layer (ii), or only a part thereof. The sheet product according to the invention may be prepared by applying a conventional thermal coating to the outer sheet bearing the pre-coat layer, using a conventional coater. It is however preferably prepared by printing a thermal ink onto the pre-coated surface, using a printer. The ink can be printed onto only those parts of the pre-coated surface where thermal activity is required, which is cheaper and easier than the provision of a coating layer over the whole surface using a coater. A further advantage of such a thermal ink system is that, if desired, conventional non-thermal ink may be printed onto the surface either at the same time as printing the thermal ink, or at another time, to provide high-quality visible information on the surface.

Thermal coatings and thermal inks comprise a colour former, a colour developer and a sensitiser. Any suitable colour former and colour developer may be used in the thermal ink or coating used in the present invention. Suitable colour formers include, for example, diaryl methanes including 4,4-bis(dimethylaminobenzyhdroxybenzyl)ether, N-halophenyl, leuco auramine, and N-2,4,5-trichlorophenyl leuco auramine; fluorans including 2-dibenzylamino-6-diethylaminofluoran, 2-anilino-6-diethylaminofluoran, 3-methyl-2-anilino-6-diethylaminofluoran, 2-anilino-3-methyl-6-(ethylisopentylamino)fluoran, 2-anilino-3-methyl-6-butyl aminofluoran, 2-chloro-3-methyl-6-diethylaminofluoran, 3,6-dimethoxyfluoran, and 7,7'-bis(3-diethylaminofluoran); spiropyrans including 3-methylspirodinaphtho-pyran, 3-ethylspirodinaphthopyran, 3,3'-dichlorospirodinaphthopyran, 3-benzyl spironaphthopyran, and 3-methylnaphtho-(3-methoxybenzo)spiropyran; azaphthalides including 3-(2-ethoxy-4-diethylaminophenyl)-3-(1-octyl-2-methylindol-3-yl)-4-azaphthalide, and 3-(2-ethoxy-4-diethylaminophenyl)-3-(1-ethyl-2-methylindol-3-yl)-4-azaphthalide; indolylphthalides including 3-(p-dimethylaminophenyl)-3-(1,2-dimethylindol-3-yl)phthalide and 3-(p-dimethylaminophenyl)-3-(2-methylindol-3-yl)phthalide; thianyl methanes; and styryl quinoline.

Preferred colour formers for use in the present invention are 3,3-bis(4-dimethylaminophenyl)-6-dimethylaminophthalide, common name CVL (blue); 2'-(dibenzylamino)-6'-(diethylamino)spiro(isobenzofuran-1(3H),9'-xanthen)-3-one, Fuji Green; spiro[isobenzofuran-1(3H),9'-[9H]xanthen]-3-one,6'-(diethylamino)-2'-octylamino-, ODB1 (black); 3-dibutylamino-6-methyl-7-anilinofluoran (alternative nomenclature: spiro[isobenzofuran-1(3H),9'[9H]xanthen]-3-one,-6'(dibutylamino)-3'-methyl-2'-(phenylamino)-, ODB2 (black); 2'-anilino-6'-(ethyl(isopentyl)amino)-3'-methylspiro(isobenzofuran-1(3H),9-xanthen)3-one, S-205 (black); 3-diethylamino-6-methyl-7-(3'-methylanilino)fluoran, ODB7 (black); benzenamine,4,4'((9-butyl-9H-carbazol-3-yl)methylene)bis(N-methyl-N-phenyl-), SRB (blue); 6'-diethylamino-3'-methyl-2'-(2,4-xylidino)spiro(isobenzofuran-1(3H),9-xanthen)3-one, Black XV; 2-methyl-6-(N-p-tolyl-N-ethylamino)-fluoran, ETPM (red); spiro(isobenzofuran-1(3H),9'-(9H)xanthen)-3-one,3'-chloro-6'-(cyclohexylamino), Orange 100; 3,3'-bis(2-methyl-1-octyl-1H-indol-3-yl)-1(3H)-isobenzofuranone, Red 1-6B; Orange 1-G; Red MC30; Yellow 1-3R; and 3,3-bis(2,2-bis(4-(dimethylamino)phenyl)ethenyl) -4,5,6,7-tetrachloro- 1 (3H)-Isobenzofuranone, a green/black with activity in the near infrared useful in optical character recognition applications (OCR), trade name MG1 (Marks Chemicals).

A particularly preferred colour former for use when using a thermal ink in the present invention is 3-dibutylamino-6-methyl-7-anilinofluoran (alternative nomenclature: spiro[isobenzofuran-2(3H), 9'-[9H]xanthen]-3-one,-6'-(dibutylamino)-3'-methyl-2'-(phenylamino)-, known by the common name ODB2, CAS number 89331-94-2, and available under the Trade Marks Black I-2R (Ciba), Black T-2R (Ciba), and PSD 184 (Nisso) amongst others. Most preferably, this material is the only colour former used in the ink. However, if desired, one or more additional colour formers may be added. Such additional colour former is preferably present in an amount of less than 10%, preferably less than 5%, especially less than 1%, by wt based on total colour former. The 3-dibutylamino-6-methyl-7-anilinofluoran may contain those impurities normally introduced under manufacturing conditions; these should preferably not exceed 1%wt.

Suitable colour developers for use in the thermal coating or ink used in the present invention include, for example, bis-(3-allyl-4-hydroxy phenyl)sulphone, 2,4-dihydroxy diphenyl sulphone, p-hydroxybenzylphenol, 4,4'-disulphonyl phenol, 3-benzyl salicylic acid, 3,5-di-t-butylsalicylic acid, 4-hydroxyphenyl-4-isopropoxyphenylsulphone, 4,4'-thiodiphenol phenol-formaldehyde novolac resin, alphanaphthol, bisphenol A, bisphenol sulphone, benzyl 4-hydroxybenzoate, 3,5-dimethyl-4-hydroxybenzoic acid, 3-isopropylsalicylic acid, 4,4'-isopropylidene diphenol, and 3,3'-dimethyl-4,4'-thiodiphenol.

A particularly preferred colour developer for use in a thermal ink is bisphenol A. Most preferably, this material is the only colour developer used in the ink. However, if desired, one or more additional colour developers may be added. Such additional colour developer is preferably present in an amount of less than 10%, preferably less than 5%, especially less than 1%, by wt based on total colour developer. The bisphenol A may contain those impurities normally introduced under manufacturing conditions; these should preferably not exceed 1%wt.

Suitable sensitizers for use in the thermal coating or ink used in the present invention include, for example, dimethyl terephthalate (DMT), biphenyl benzoxynaphthalene, diphenylethoxylate, 4-acetyl biphenyl, di(isopropyl naphthalene, parabiphenyl, and PHNT. When a thermal ink is used, DMT is an especially preferred sensitizer; preferably DMT is the only sensitizer present, although one or more additional sensitizers may be present if desired. To prevent excessive discolouration, such additional sensitizer is preferably present in an amount of less than 10%, preferably less than 5%, by wt based on total sensitizer. The DMT may contain those impurities normally introduced under manufacturing conditions; these should preferably not exceed 1%wt.

The thermal coating or ink used in the present invention preferably comprises a pigment. A pigment comprised in a thermal ink is preferably a high surface area, absorptive pigment, for example precipitated calcium carbonate, silica or calcined clay. Preferably the ink also comprises an additional pigment, for example a plastic pigment in the form of hollow spheres.

A preferred thermal ink for use in the present invention comprises a colour former, a colour developer, and DMT as a sensitizer, preferably together with a pigment, and preferably being free from wax. Such inks comprising 3-dibutylamino-6-methyl-7-anilinofluoran as the only colour former and bisphenol A as the only colour developer, have been found to give particularly good performance, with minimal discolouration of the product according to the invention on storage.

A thermal ink suitably consists of individual components mixed to form the ink precursor:
1) A dye system which includes the colour former and the sensitizer, and which may also include components such as, for example, one or more surfactants, preferably a polyvinyl alcohol surfactant and optionally additional surfactants, and antifoam agents.
2) A coreactant system which includes the colour developer and the sensitizer, and which may also include components such as, for example, one or more surfactants, preferably a polyvinyl alcohol surfactant and optionally additional surfactants, and antifoam agents.
3) Preferably, a pigment dispersion in slurry form.

A thermal ink for use in the present invention is suitably prepared by grinding the above components separately. These separate grinding operations reduce the tendency for unwanted colour reaction and produce a non-coloured ink vehicle. Preferably the particles in each component are ground to a particle size of less than 1.5µ, especially less than 1.0µ, for example from 0.25µ to 1.0µ. The components are then mixed together, optionally including additional components such as slip agents and defoamers, to form the resulting ink, which may be printed using conventional means, being compatible with standard flexographic printing processes in terms of viscosity and cell transfer. Ink in which the solid particles have a particle size of less than 1.5µ produces especially advantageous results.

Other additives which may be present in the ink if desired include zinc stearate which can be added as a slip agent to prevent build up on the thermal printing head, depending on the thermal printer design.

When a conventional thermal coating is applied, this may contain a small quantity of paraffin wax to prevent pre-reaction during calendaring. Also, stearamide wax, such as Crodamide SR (Trade Mark, Croda), may be used as a co-sensitiser which reduces the energy needed for reaction. OBA may also be added to control whiteness.

The present invention enables sheets to be provided not only with visible written information by means of thermal printing, using conventional thermal printers, and optionally also by conventional printing; but also with magnetically written information. This provides major benefits in terms of paper handling and consequential lowering of costs, in numerous circumstances. The invention therefore provides a method of storing digital magnetic data, which comprises writing digital data to a product according to the invention using a magnetic data writer. The invention also provides a method of reading digital magnetic data, which comprises writing digital data to a product according to the invention using a magnetic data writer, and subsequently reading said data using a magnetic data reader. The invention also provides a method of thermally printing a product according to the invention, which comprises passing a product according to the invention through a thermal printer.

The invention will now be illustrated by the following Example, in which all parts and percentages are by weight unless otherwise specified.

### Example

A thermal, magnetically-readable paper was made at laboratory scale by laminating a thermal paper to a base sheet with glue containing magnetic pigment of coercivity 360 oersteds. The top ply was a standard 60g/m² thermal fax grade paper. The bottom ply was a 60µm base paper with approximately 10gsm of calendared, pigmented pre-coating (i.e. calcium carbonate and latex). These two plys were laminated together as described in WO 03/102926 using a 3:1 mixture of magnetic pigment ink (WL315 from Pyral) and an aqueous laminating glue (SuperLok 320 from National Starch) giving 8 to 10g/m² of dry magnetic pigment in the finished product. The resulting thermal sheet was then tested by magnetically encoding it in a Tally Genicom T5200 ticket printer modified to encode and decode magnetic data at 75bpi, thermally imaging it via a "step wedge" thermal image tester at a range of temperatures and then finally re-reading the magnetic signal again on the Tally T5200 magnetic ticket printer. Both the thermal imaging and magnetic encoding and decoding worked normally. In particular, it was noted that there was no corruption of the magnetic data by passage of the sheet through the thermal image tester.

## Claims

1. A magnetically-activatable sheet product suitable for carrying digital magnetic data, comprising (i) a pair of laminated outer sheets between which is a magnetic layer comprising magnetically-activatable particles in a binder matrix; (ii) at least one layer applied to the outward facing surface of one of the outer sheets, said layer comprising a pigment and a binder; and (iii) a thermal coating or a thermal ink applied to said layer (ii).

2. A sheet product according to claim 1, in which each outer sheet is made of paper.

3. A sheet product according to either claim 1 or claim 2, in which each outer sheet is sufficiently opaque such that, in the finished product, the appearance of the magnetic layer is masked.

4. A sheet product according to any one of claims 1 to 3, in which layer (ii) of the product contains a pigment selected from a clay, calcium carbonate, silica, titanium dioxide, and/or a plastic pigment in the form of hollow spheres.

5. A sheet product according to any one of claims 1 to 4, in which layer (ii) of the product contains a pigment in solid porous particulate form.

6. A sheet product according to any one of claims 1 to 5, in which layer (ii) contains a binder selected from a latex, a starch or starch derivative, a polyvinyl alcohol and/or a proteinaceous material.

7. A sheet product according to any one of claims 1 to 6, in which layer (ii) is applied to the whole of the outward-facing surface of one of the outer sheets.

8. A sheet product according to any one of claims 1 to 7, in which layer (iii) comprises a thermal ink comprising a colour former, a colour developer and a sensitiser, which has been applied to layer (ii) using a printer.

9. A sheet product according to claim 8, in which said thermal ink also comprises a pigment.

10. A sheet product according to either claim 8 or claim 9, in which said thermal ink comprises dimethyl terephthalate as sensitizer.

11. A sheet product according to claim 10, in which in said thermal ink the colour former comprises 3-dibutylamino-6-methyl-7-anilinofluoran and the colour developer comprises bisphenol A.

12. A sheet product according to claim 11, in which 3-dibutylamino-6-methyl-7-anilinofluoran is the only colour former present and bisphenol A is the only colour developer present.

13. A sheet product according to any one of claims 1 to 12, in which the magnetic layer comprises chromium dioxide, iron oxide, a polycrystalline nickel-cobalt alloy, a cobalt-chromium or cobalt-samarium alloy, and/or barium-ferrite.

14. A sheet product according to any one of claims 1 to 13, in which the magnetic layer comprises a binder selected from a polyvinyl alcohol, a latex, a starch, and/or a proteinaceous binder.

15. A sheet product according to any one of claims 1 to 14, in which one or both of the outer sheets carries a pigment/binder coat on its inward facing surface.

16. A sheet product according to any one of claims 1 to 15, in which the outer sheets are sufficient opaque such that, in the finished product, the appearance of the magnetic layer is masked.

17. A method of storing digital magnetic data, which comprises writing digital data to a product as claimed in any one of claims 1 to 16.

18. A method of reading digital magnetic data, which comprises writing digital data to a product as claimed in any one of claims 1 to 16, using a magnetic data writer, and subsequently reading said data using a magnetic data reader.

19. A method of thermally printing a product as claimed in any one of claims 1 to 16, which comprises passing said product through a thermal printer.

## Patentansprüche

1. Magnetisch aktivierbares Bogenprodukt, geeignet zum Aufnehmen digitaler magnetischer Daten, umfassend:
(i) ein Paar laminierter Außenbögen, zwischen denen sich eine magnetische Schicht befindet, welche magnetisch aktivierbare Partikel in einer Bindermatrix umfasst;
(ii) mindestens eine aufgetragene Schicht auf der nach außen weisenden Fläche eines der Außenbögen, wobei die Schicht ein Pigment und ein Bindemittel umfasst; und
(iii) eine thermische Beschichtung oder eine thermische Tinte, die auf diese Schicht (ii) aufgebracht ist.

2. Bogenprodukt gemäß Anspruch 1, wobei jeder Außenbogen aus Papier gefertigt ist.

3. Bogenprodukt gemäß einem der Ansprüche 1 oder 2, wobei jeder Außenbogen ausreichend opaque ist, so dass in dem fertigen Produkt die Erscheinung der magnetischen Schicht maskiert ist.

4. Bogenprodukt gemäß einem der Ansprüche 1 bis 3, wobei Schicht (ii) des Produktes ein Pigment enthält, welches ausgewählt ist aus Ton, Kalziumcarbonat, Silica, Titandioxid und/oder einem Kunststoffpigment in der Form von Hohlkugeln.

5. Bogenprodukt gemäß einem der Ansprüche 1 bis 4, wobei Schicht (ii) des Produktes ein Pigment in einer festen porösen partikulären Form enthält.

6. Bogenprodukt gemäß einem der Ansprüche 1 bis 5, wobei Schicht (ii) ein Bindemittel enthält, ausgewählt aus einem Latex, einer Stärke oder einem Stärkederivat, einem Polyvinylalkohol und/oder einem proteinösen Material.

7. Bogenprodukt gemäß einem der Ansprüche 1 bis 6, wobei Schicht (ii) auf die Gesamtheit der nach außen weisenden Fläche eines der Außenbögen aufgebracht ist.

8. Bogenprodukt gemäß einem der Ansprüche 1 bis 7, wobei Schicht (iii) eine thermische Tinte umfasst, umfassend einen Farbbildner, einen Farbentwickler und einen Sensibilisator, der auf Schicht (ii) unter Verwendung eines Druckes aufgebracht wurde.

9. Bogenprodukt gemäß Anspruch 8, wobei die thermische Tinte auch ein Pigment umfasst.

10. Bogenprodukt entweder gemäß Anspruch 8 oder Anspruch 9, wobei die thermische Tinte Dimethylterephthalat als Sensibilisator umfasst.

11. Bogenprodukt gemäß Anspruch 10, wobei in der thermischen Tinte der Farbbildner 3-Dibutylamino-6-methyl-7-anilinofluoran umfasst und der Farbentwickler Bisphenol A umfasst.

12. Bogenprodukt gemäß Anspruch 11, wobei 3-Dibutylamino-6-methyl-7-anilinofluoran der einzige vorhandene Farbbildner ist und Bisphenol A der einzige vorhandene Farbentwickler ist.

13. Bogenprodukt gemäß einem der Ansprüche 1 bis 12, wobei die magnetische Schicht Chromdioxid, Eisenoxid, eine polykristalline Nickel-Kobalt-Legierung, ein Kobalt-Chrom- oder Kobalt-Samarium-Legierung und/oder Bariumferrit umfasst.

14. Bogenprodukt gemäß einem der Ansprüche 1 bis 13, wobei die magnetische Schicht ein Bindemittel umfasst, ausgewählt aus einem Polyvinylalkohol, einem Latex, einer Stärke und/oder einem proteinösen Bindemittel

15. Bogenprodukt gemäß einem der Ansprüche 1 bis 14, wobei ein oder beide der Außenbögen eine Pigment/Bindemittel-Beschichtung an seiner nach innen weisenden Fläche trägt.

16. Bogenprodukt gemäß einem der Ansprüche 1 bis 15, wobei die Außenbögen ausreichend opaque sind, so dass bei dem fertigen Produkt die Erscheinung der magnetischen Schicht maskiert ist.

17. Verfahren zum Speichern digitaler magnetischer Daten, wobei Schreiben digitaler Daten auf einem Produkt umfasst ist, welches nach einem der Ansprüche 1 bis 16 beansprucht ist.

18. Verfahren zum Lesen digitaler magnetischer Daten, wobei Schreiben digitaler Daten auf einem Produkt wie in einem der Ansprüche 1 bis 16 beansprucht, Verwenden eines magnetischen Datenschreibers und nachfolgend Lesen dieser Daten unter Verwendung eines magnetischen Datenlesers umfasst sind.

19. Verfahren zum Thermodrucken eines Produktes wie in einem der Ansprüche 1 bis 16 beansprucht, wobei Durchgang dieses Produktes durch einen Thermodrucker umfasst ist.

## Revendications

1. Produit en feuille activable magnétiquement, convenant pour comporter des données magnétiques numériques, comprenant (i) une paire de feuilles externes stratifiées entre lesquelles se trouve une couche magnétique comprenant des particules activables magnétiquement dans une matrice liante ; (ii) au moins une couche appliquée sur la surface faisant face vers l'extérieur de l'une des feuilles externes, ladite couche comprenant un pigment et un liant ; et (iii) un revêtement thermique ou une encre thermique appliqué(e) sur ladite couche (ii).

2. Produit en feuille selon la revendication 1, dans lequel chaque feuille externe est faite de papier.

3. Produit en feuille selon soit la revendication 1 soit la revendication 2, dans lequel chaque feuille externe est suffisamment opaque pour que, dans le produit fini, l'aspect de la couche magnétique soit masqué.

4. Produit en feuille selon l'une quelconque des revendications 1 à 3, dans lequel la couche (ii) du produit contient un pigment choisi parmi une argile, le carbonate de calcium, la silice, le dioxyde de titane et/ou un pigment plastique sous la forme de sphères creuses.

5. Produit en feuille selon l'une quelconque des revendications 1 à 4, dans lequel la couche (ii) du produit contient un pigment sous forme particulaire solide poreuse.

6. Produit en feuille selon l'une quelconque des revendications 1 à 5, dans lequel la couche (ii) contient un liant choisi parmi un latex, un amidon ou dérivé d'amidon, un alcool polyvinylique et/ou une matière protéinique.

7. Produit en feuille selon l'une quelconque des revendications 1 à 6, dans lequel la couche (ii) est appliquée sur la totalité de la surface faisant face vers l'extérieur de l'une des feuilles externes.

8. Produit en feuille selon l'une quelconque des revendications 1 à 7, dans lequel la couche (iii) comprend une encre thermique comprenant un chromogène, un développateur de couleur et un sensibilisateur, qui a été appliquée sur la couche (ii) en utilisant une imprimante.

9. Produit en feuille selon la revendication 8, dans lequel ladite encre thermique comprend aussi un pigment.

10. Produit en feuille selon soit la revendication 8 soit la revendication 9, dans lequel ladite encre thermique comprend du téréphtalate de diméthyle en tant que sensibilisateur.

11. Produit en feuille selon la revendication 10, dans lequel, dans ladite encre thermique, le chromogène comprend du 3-dibutylamino-6-méthyl-4-anilinofluorane et le développateur de couleur comprend du bisphénol A.

12. Produit en feuille selon la revendication 11, dans lequel le 3-dibutylamino-6-méthyl-7-anilinofluorane est le seul chromogène présent et le bisphénol A est le seul développateur de couleur présent.

13. Produit en feuille selon l'une quelconque des revendications 1 à 12, dans lequel la couche magnétique comprend du dioxyde de chrome, de l'oxyde de fer, un alliage nickel-cobalt polycristallin, un alliage cobalt-chrome ou cobalt-samarium, et/ou baryum-ferrite.

14. Produit en feuille selon l'une quelconque des revendications 1 à 13, dans lequel la couche magnétique comprend un liant choisi parmi un alcool polyvinylique, un latex, un amidon et/ou un liant protéinique.

15. Produit en feuille selon l'une quelconque des revendications 1 à 14, dans lequel l'une ou les deux des feuilles externes porte une couche de pigment/liant sur sa surface faisant face vers l'intérieur.

16. Produit en feuille selon l'une quelconque des revendications 1 à 15, dans lequel les feuilles externes sont suffisamment opaques pour que, dans le produit fini, l'aspect de la couche magnétique soit masqué.

17. Procédé de stockage de données magnétiques numériques, qui comprend l'enregistrement de données numériques sur un produit tel que revendiqué dans l'une quelconque des revendications 1 à 16.

18. Procédé de lecture de données magnétiques numériques, qui comprend l'enregistrement de données numériques sur un produit tel que revendiqué dans l'une quelconque des revendications 1 à 16, en utilisant un enregistreur de données magnétiques, puis la lecture subséquente desdites données en utilisant un lecteur de données magnétiques.

19. Procédé d'impression thermique d'un produit tel que revendiqué dans l'une quelconque des revendications 1 à 16, qui comprend le passage dudit produit à travers une imprimante thermique.
